# EUROPEAN PATENT APPLICATION

(11) **EP 2 420 687 A1**
(43) Date of publication of application: **22.02.2012**
(21) Application number: 11178090.4
(22) Date of filing: 19.08.2011
(51) Int. Cl.: F16B 47/00

(54) **Attachment system**

(30) Priority: 20.08.2010 GB 1013953
(71) Applicant: Envirotech Limited, MSD 1703 Msida (MT)
(72) Inventor: Davies, David, Winchester, Hampshire SO21 3BZ (GB)
(74) Representative: Treleven, Colin

(57) **Abstract**

An attachment system (100) for attaching a first object to a surface of a second object. The attachment system comprises an attachment mechanism body (110) comprising first (120) and second (130) jaw members arranged to grip and release the first object. The attachment system further comprises a suction cup arrangement (140), operably coupled to the attachment mechanism body and arranged to operably couple the attachment mechanism body to the surface of the second object by way of suction. The attachment mechanism body (110) further comprises a grip adjustment mechanism (150) for adjusting a distance between the first and second jaw members to enable the first and second jaw members to selectively grip and release the first object

## Description

### Field of the invention

The field of the invention relates to an attachment system, and more particularly to an attachment system for attaching a first object to a surface of a second object.

### Background of the Invention

It is often necessary for one object to be attached to, or otherwise held in place relative to, a second object. In particular, it is often necessary for, say, a sheet of material such as a sheet of tarpaulin or the like to be attached to some supporting object, for example to provide shelter from the rain or wind. In order to attach such sheets to a supporting object, it is typically necessary to provide some form of attachment mechanism capable of being securely coupled to the sheet of tarpaulin, and capable of being securely coupled to the supporting object.

US2008104805 discloses an example of such an attachment mechanism, which comprises a clip body having first and second jaw members arranged to adjustably grip and release the sheet of, in this example, tarpaulin. The attachment mechanism of US2008104805 further comprises at least one further attachment fitting for engaging an article separate from the sheet material. Examples of such an at least one further attachment fitting taught in US2008104805 comprise: a hook portion for receiving a rope or cords: internal threads to engage threads provided on the article separate from the sheet material; a strap member for wrapping itself around articles, etc.

A problem with known attachment mechanisms, such as the example taught in US2008104805, is that they require the article to which the sheet material is to be secured to comprise an attachment feature, for example a rope or chord to engage with a hook, threads to engage with internal threads of the attachment mechanism, or simply something around which a strap member may be wrapped. However, it is often the case that such features may not be available, rendering such known attachment mechanisms ineffective.

Thus, there is a need for an improved method and apparatus for attaching a sheet of material to an article separate from the sheet of material.

### Summary of the Invention

Accordingly, the invention seeks to mitigate, alleviate or eliminate one or more of the abovementioned disadvantages singly or in any combination.

According to an aspect of the invention, there is provided an attachment system for attaching a first object to a surface of a second object. The attachment system comprises an attachment mechanism body comprising first and second jaw members arranged to grip and release the first object. The attachment system further comprises a suction cup arrangement, operably coupled to the attachment mechanism body and arranged to operably couple the attachment mechanism body to the surface of the second object by way of suction. The attachment mechanism body further comprises a grip adjustment mechanism for adjusting a distance between the first and second jaw members to enable the first and second jaw members to selectively grip and release the first object.

In this manner, the suction cup arrangement enables the attachment system to be affixed to the surface of an object, without the need for the object to which it is to be attached to comprise one or more attachment features.

In one optional embodiment of the invention, the grip adjustment mechanism may comprise a threaded shaft operably coupled to the first jaw member and arranged to extend through an aperture within the second jaw member and to engage with a retaining element comprising an internally threaded recess or aperture.

In one optional embodiment of the invention, the first and second jaw members may comprise engagement features on adjacent surfaces thereof. For example, the first and second jaw members may comprise teeth formations on adjacent surfaces thereof arranged to cooperate with one another.

In one optional embodiment of the invention, the first and second jaw members may comprise planar configurations, and are arranged to grip and release a first object comprising flexible sheet material.

In one optional embodiment of the invention, the first and second jaw members may comprise concave configurations, and are arranged to grip and release a first object comprising a cylindrical configuration.

In one optional embodiment of the invention, the attachment mechanism body may comprise a second aperture therethrough, and the suction cup arrangement comprises a threaded shaft operably coupled to a suction cup, and arranged to pass through the second aperture in the attachment mechanism body, and to be retained in place by way of a threaded nut.

These and other aspects, features and advantages of the invention will be apparent from, and elucidated with reference to, the embodiments described hereinafter.

### Brief Description of the Drawings

Embodiments of the invention will be described, by way of example only, with reference to the accompanying drawings, in which:
FIG. 1 illustrates a cross-sectional view of an example of an attachment system in accordance with some embodiments of the present invention.
FIG. 2 illustrates a plan view of the attachment system of FIG. 1.
FIG. 3 illustrates a cross-sectional view of an example of an attachment system in accordance with some alternative embodiments of the present invention.
FIG. 4 illustrates a cross-sectional view of an example of an attachment system in accordance with some further alternative embodiments of the present invention.
FIG. 5 illustrates a perspective view of an example of an attachment system in accordance with some further alternative embodiments of the present invention.

### Detailed Description of Embodiments of the Invention

Reference will now be made to preferred embodiments of the present invention with reference to examples illustrated in the accompanying drawings. However, it will be appreciated that the present invention is not limited to the specific illustrated examples.

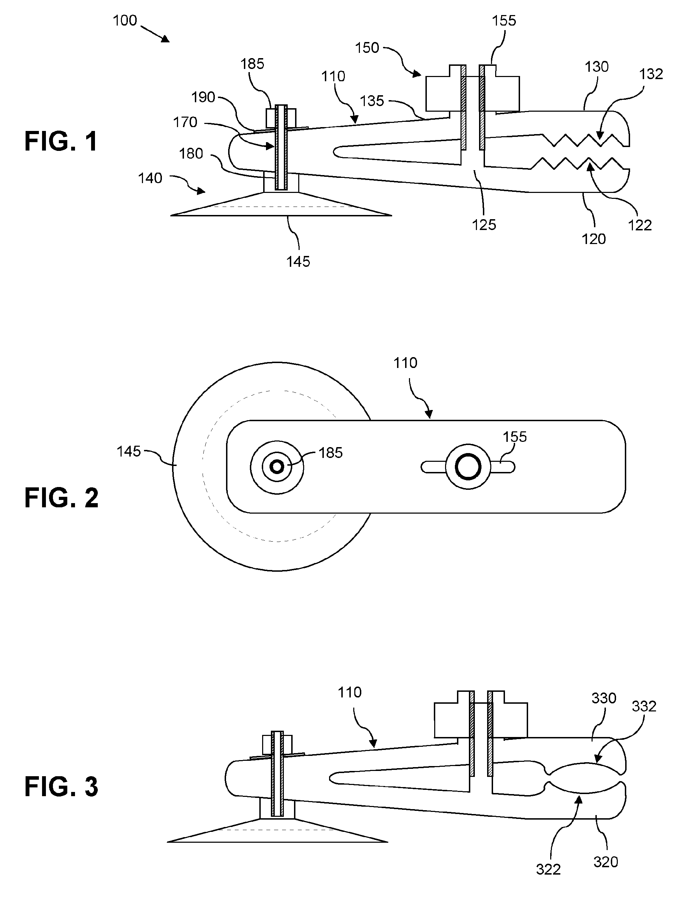

Referring first to FIG. 1, there is illustrated a cross-sectional view of an example of an attachment system 100 for attaching a first object (not shown) to a surface of a second object (not shown).

FIG. 2 illustrates a plan view of the attachment system 100 of FIG. 1. The attachment system 100 comprises an attachment mechanism body 110 comprising first and second jaw members 120, 130 respectively arranged to grip and release the first object. The attachment system 100 further comprises a suction cup arrangement 140, operably coupled to the attachment mechanism body 110 and arranged to operably couple the attachment mechanism body 110 to the surface of the second object by way of suction.

Advantageously, the suction cup arrangement 140 enables the attachment system 100 to be affixed to the surface of an object, thereby overcoming the problem of prior art attachment systems requiring the object to which it is to be attached to comprise one or more attachment features, for example a rope or chord to engage with a hook, threaded elements, or simply something around which a strap member may be wrapped. Applications where it is advantageous to be able to attach objects to the surface(s) of another object may include, by way of example only, glass panes such as windows, vehicle body panels such as car doors, bonnets and/or roofs, the hull or deck of a boat, the sides of caravans and recreation vehicles, etc.

For the illustrated example, the attachment mechanism body 110 further comprises a grip adjustment mechanism 150 for adjusting a distance between the first and second jaw members 120, 130 to enable the first and second jaw members 120, 130 to selectively grip and release an object. In this manner, the first and second jaw members 120, 130 are able to grip objects comprising a range of thicknesses, and with adjustable pressure.

For the illustrated example, the grip adjustment mechanism 150 comprises a threaded shaft 125 operably coupled to the first jaw member 120 and arranged to extend through an aperture 135 within the second jaw member and to engage with a retaining element 155 comprising an internally threaded recess or aperture. In this manner, by rotating the retaining element 155 about the threaded shaft 125 in a first direction the threaded shaft 125 and the internally threaded recess/aperture of the retaining element 155 cooperate to move the retaining element 155 along the threaded shaft 125. For example, by rotating the retaining element 155 in, say, a clockwise direction, the retaining element 155 may be caused to move towards the first jaw member 120, thereby compelling the second jaw member 130 towards the first jaw member 120. Conversely, by rotating the retaining element 155 in the opposite direction, i.e. anti-clockwise, the retaining element 155 may be caused to move away from the first jaw member 120, allowing the second jaw member 130 to move away from the first jaw member 130.

In accordance with some embodiments of the present invention, the first and second jaw members 120, 130 may comprise engagement features on adjacent surfaces thereof, in order to more securely grip an object there between. For example, and as illustrated in FIG. 1, the first and second jaw members 120, 130 may comprise teeth formations 122 on adjacent surfaces thereof arranged to cooperate with one another. For the illustrated example, the teeth formations comprise a generally triangular configuration. However, it will be appreciated that alternative teeth configurations may equally be used, for example, rounded etc.

One example of a suitable attachment mechanism body is the Rhino Grip™ available from www.tarpclipstore.com.

Suction cup arrangements are well known, and as such the suction cup arrangement 140 need not be described in greater detail in order to enable a skilled person to implement this feature of the present invention. However, for completeness, the attachment mechanism body 110 of the illustrated example comprises a second aperture 170 there through, and the suction cup arrangement 140 comprises a threaded shaft 180 operably coupled to a suction cup 145, and arranged to pass through the second aperture 170 in the attachment mechanism body 110, and to be retained in place by way of a threaded nut 185. For the illustrated example, a washer 190 is provided between threaded nut 185 and the attachment mechanism body 110.

One example of a suitable suction cup arrangement is available from Adams Mfg Crop. (www.suctioncups.com), part number-83.

For the example illustrated in FIG. 1, the first and second jaw members 120, 130 comprise planar configurations, with engagement features in the form of teeth 122, 132 provided on adjacent surfaces thereof. In this manner, the first and second jaw members 120, 130 are arranged to grip and release a first object comprising generally planar configurations, such as sheets of material and in particular sheets of flexible material. However, it is contemplated that jaw members comprising an alternative configuration may equally be provided.

For example, and as illustrated in **FIG. 3****,** the attachment mechanism body 110 may comprise first and second jaw members 320, 330 comprising adjacent surfaces 322, 332 having generally concave configurations. In this manner, the first and second jaw members 320, 330 may be arranged to grip and release a first object comprising a generally cylindrical configuration, such as a pipe, rope, tube, pole or other similar object such as a handle of, say, an umbrella etc.

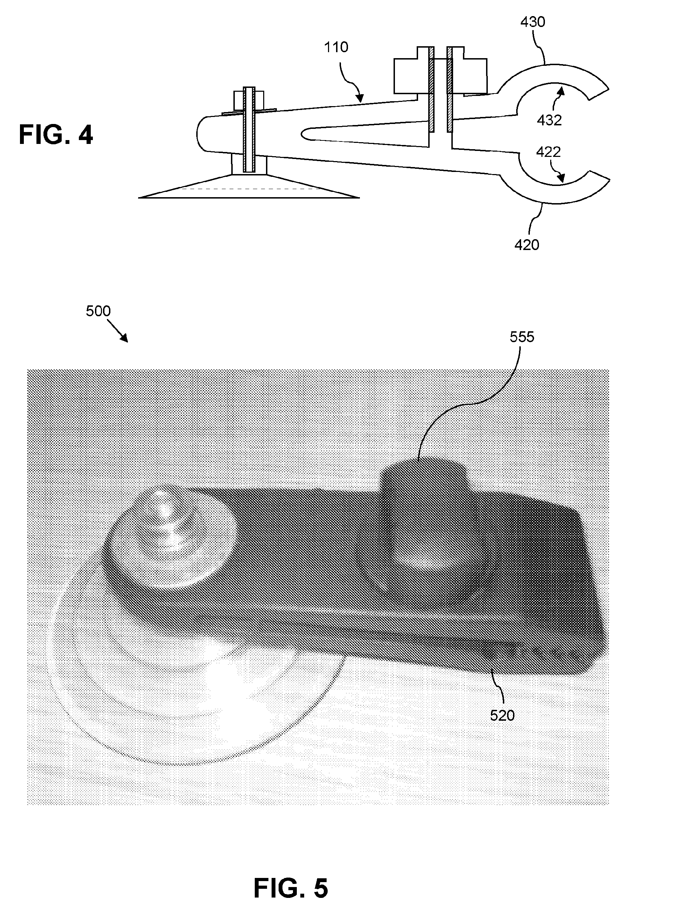

**FIG. 4** illustrates a still further example whereby the attachment mechanism body 110 comprises first and second jaw members 420, 430 comprising generally opposing arced configurations. In this manner, the first and second jaw members 420, 430 may also be arranged to grip and release a first object comprising a generally cylindrical configuration, such as a pipe, rope, tube, pole or other similar object such as a handle of, say, an umbrella etc.

Although not illustrated, it is contemplated that, for the examples illustrated in FIG's 3 and 4, the adjacent surfaces 322, 332, 422, 432, of the first and second jaw members 320, 330, 420, 430 may be provided with engagement features, for example comprising teeth formations (not shown) or other formations that facilitate gripping and retaining an object there between.

**FIG. 5** illustrates a perspective view of an attachment system 500 according to an alternative example of the present invention. For the examples illustrated in FIG's 1 to 3, the retaining element 155 comprises an internally threaded aperture extending there through, and arranged to receive the threaded shaft 125 operably coupled to the first jaw member 120. For the example illustrated in FIG. 5, the attachment system 500 comprises a retaining element 555 comprising an internally threaded recess (not shown) arranged to receive a threaded shaft (not shown) operably coupled to a first jaw member 520.

Although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Thus, examples of an attachment system have been described that may alleviate at least some of the shortcomings of past and present techniques and/or mechanisms.

## Claims

1. An attachment system for attaching a first object to a surface of a second object, the attachment system comprising:
an attachment mechanism body comprising first and second jaw members arranged to grip and release the first object;
a suction cup arrangement, operably coupled to the attachment mechanism body and arranged to releasably couple the attachment mechanism body to the surface of the second object by way of suction;
wherein the attachment mechanism body further comprises a grip adjustment mechanism for adjusting a distance between the first and second jaw members to enable the first and second jaw members to selectively grip and release the first object.

2. The attachment system of Claim 1 wherein the grip adjustment mechanism comprises a threaded shaft operably coupled to the first jaw member and arranged to extend through an aperture within the second jaw member and to engage with a retaining element comprising an internally threaded recess or aperture.

3. The attachment system of Claim 1 or Claim 2 wherein the first and second jaw members comprise engagement features on adjacent surfaces thereof.

4. The attachment system of Claim 3 wherein the first and second jaw members comprise teeth formations on adjacent surfaces thereof arranged to cooperate with one another.

5. The attachment system of any preceding Claim wherein the first and second jaw members comprise planar configurations, and are arranged to grip and release a first object comprising flexible sheet material.

6. The attachment system of any of Claims 1-4 wherein the first and second jaw members comprise concave inner surfaces and are arranged to grip and release a first object of a cylindrical configuration.

7. The attachment system of any preceding Claim wherein the attachment mechanism body comprises a second aperture therethrough, and the suction cup arrangement comprises a threaded shaft operably coupled to a suction cup, and arranged to pass through the second aperture in the attachment mechanism body, and to be retained in place by way of a threaded nut.
